(19) Europäisches Patentamt
European Patent Office
Office européen des brevets

(11) **EP 0 840 962 B1**

(12) **EUROPÄISCHE PATENTSCHRIFT**

(45) Veröffentlichungstag und Bekanntmachung des Hinweises auf die Patenterteilung:
**28.09.2005 Patentblatt 2005/39**

(21) Anmeldenummer: **95925722.1**

(22) Anmeldetag: **24.07.1995**

(51) Int Cl.⁷: $H04J\ 3/06$

(86) Internationale Anmeldenummer:
**PCT/DE1995/000969**

(87) Internationale Veröffentlichungsnummer:
**WO 1997/004545 (06.02.1997 Gazette 1997/07)**

(54) **VERFAHREN ZUR ERMITTLUNG EINER EMPFÄNGERUHRZEIT ZUM EMPFANGSZEITPUNKT EINER IN EMPFANGENEN DATENELEMENTEN ENTHALTENEN SENDEZEITMARKE**

METHOD OF DETERMINING A RECEIVER TIME AT THE MOMENT OF RECEPTION OF A TRANSMISSION TIME MARK IN RECEIVED DATA ELEMENTS

PROCEDE DE DETERMINATION D'UN TEMPS D'HORLOGE D'UN RECEPTEUR A L'INSTANT DE RECEPTION D'UN MARQUEUR TEMPOREL D'EMISSION CONTENU DANS DES ELEMENTS DE DONNEES RECUS

(84) Benannte Vertragsstaaten:
**DE FR GB IT**

(43) Veröffentlichungstag der Anmeldung:
**13.05.1998 Patentblatt 1998/20**

(73) Patentinhaber: **Infineon Technologies AG**
**81669 München (DE)**

(72) Erfinder: **HÜBL, Markus**
**D-85551 Kirchheim (DE)**

(74) Vertreter: **Reinhard - Skuhra - Weise & Partner**
**Postfach 44 01 51**
**80750 München (DE)**

(56) Entgegenhaltungen:
**EP-A- 0 624 983       EP-A- 0 634 870**
**US-A- 5 347 540**

- **IEEE TRANSACTIONS ON COMMUNICATIONS, OCT. 1991, USA, Bd. 39, Nr. 10, ISSN 0090-6778, Seiten 1482-1493, MILLS D L 'Internet time synchronization: the network time protocol'**
- **IEEE JOURNAL ON SELECTED AREAS IN COMMUNICATIONS, DEC. 1983, USA, Bd. SAC-1, Nr. 6, ISSN 0733-8716, Seiten 1022-1028, MONTGOMERY W A 'Techniques for packet voice synchronization'**
- **INTERNATIONAL SWITCHING SYMPOSIUM 1990 "INNOVATIONS IN SWITCHING TECHNOLOGY", STOCKHOLM, MAY 28 - JUNE 1, 1990, Bd. VOL. 4, Nr. 6, 28.Mai 1990 INSTITUTE OF ELECTRICAL AND ELECTRONICS ENGINEERS, Seiten 25-28, XP 000130957 VOETEN B ET AL 'INTEGRATING VIDEO CODECS IN ATM NETWORKS'**

**Beschreibung**

Die vorliegende Erfindung betrifft ein Verfahren zur Ermittlung einer Empfängeruhrzeit zum Empfangszeitpunkt einer in empfangenen Datenelementen enthaltenen Sendezeitmarke gemäß dem Oberbegriff des Patentanspruchs 1, d.h. ein Verfahren zur Ermittlung einer Empfängeruhrzeit zum Empfangszeitpunkt einer in empfangenen Datenelementen enthaltenen Sendezeitmarke, mit den Schritten Speichern einer Vielzahl von aufeinanderfolgend empfangenen Datenelementen, Speichern einer einem Datenelementempfangszeitpunkt entsprechenden Empfängeruhrzeit, Durchsuchen der gespeicherten Datenelemente nach einer Sendezeitmarke, und Ermittlung der dem Empfangszeitpunkt der Sendezeitmarke entsprechenden Empfängeruhrzeit anhand der gespeicherten Empfängeruhrzeit(en), wie aus EP-A-0 624 983 bekannt.

Zu übertragende Datenelemente wie beispielsweise Audio- und Videodaten werden vor der Datenübertragung zunehmend digitalisiert, um durch den Einsatz von digitalen Datenreduktions- und Kompressionsverfahren die Bandbreiten von Übertragungskanälen gering halten bzw. optimal ausnutzen zu können.

Die digitalisierten und gegebenenfalls komprimierten Daten werden für die Übertragung in paket- oder stromorientierte Datenströme formatiert.

Um die ordnungsgemäße Rekonstruktion der Daten auf der Empfängerseite zu unterstützen, können diese senderseitig mit zusätzlichen Informationen wie beispielsweise Zeitmarken und dergleichen versehen werden.

Die Formatierung von Datenpaketen und die Einbindung von Zeitmarken ist für den Audio- und Videobereich beispielsweise in Teil 1 des MPEG2-Standards (ISO/IEC 13818) definiert.

Die Übertragung von Zeitmarken kann beispielsweise vorgesehen werden, um eine Uhr eines Empfängers (Dekoder) mit der eines Senders (Enkoder) zu synchronisieren (damit z.B. ein Bild oder ein Audio-Ausschnitt zum richtigen Zeitpunkt ausgegeben werden kann) und/oder um die Geschwindigkeit des Arbeitstaktes im Empfänger zu regeln.

Zur Synchronisierung der Empfängeruhr muß der Empfänger des digital kodierten Datenstromes aus dem ankommenden Datenstrom die vom Sender eingefügten Sendezeitmarken extrahieren und diese unter Berücksichtigung des jeweils aktuellen Wertes der Empfängeruhr (Empfangszeitmarken) einer Nachregelung der Empfängeruhr zugrundelegen.

Die Extraktion der Sendezeitmarken erfordert ein Verfahren, das den beim Empfänger ankommenden Datenstrom analysiert.

Eine solche Analyse kann mittels dedizierter Hardware durchgeführt werden. Alternativ oder ergänzend kann auch ein programmierbares System eingesetzt werden.

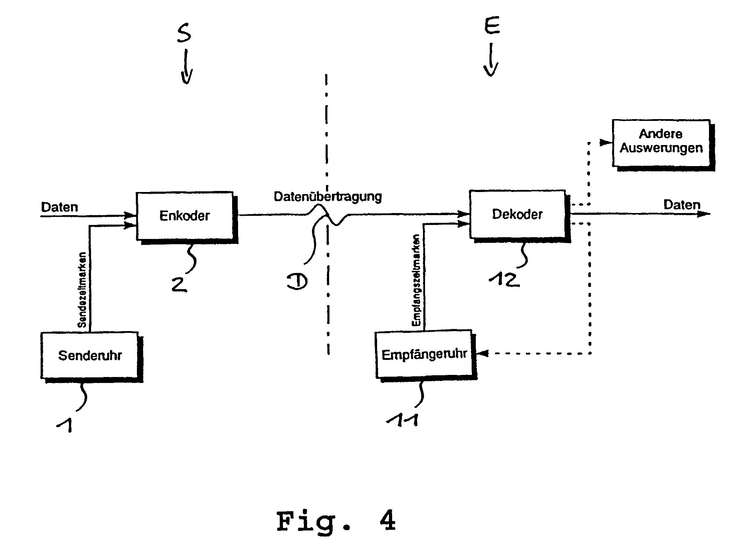

Das grundlegende Prinzip, nach welchem ein System dieser Art arbeitet, ist in dem in Figur 4 gezeigten Blockschaltbild veranschaulicht.

Das in Figur 4 gezeigte System besteht aus einem Sender S, einem Empfänger E und einer Datenübertragungsstrecke D, über welche vom Sender ausgegebene Datenelemente in Form eines Datenstroms zum Empfänger versandt werden, welcher diese Daten empfängt und weiterverarbeitet.

Den vom Sender S versandten Daten sind Sendezeitmarken beigefügt, die von einer Senderuhr 1 erzeugt und mittels eines Enkoders 2 zwischen die zu übertragenden Daten eingefügt werden; der Enkoder 2 kann neben dem Einfügen der Sendezeitmarken auch eine Kompression der zu übertragenden Daten, eine Formatierung der zu übertragenden Daten entsprechend einem vorbestimmten Übertragungsprotokoll etc. durchführen.

Der vom Sender übertragene Datenstrom gelangt im Empfänger E in einen Dekoder 12.

Der Dekoder 12 gewinnt aus dem Datenstrom die zu übertragenden Daten wieder. Ferner filtert er aus dem empfangenen Datenstrom die Sendezeitmarken heraus und vergleicht, ob diese den jeweils von einer Empfängeruhr 11 erzeugten und ebenfalls in den Dekoder 12 eingegebenen Empfangszeitmarken entsprechen.

Falls eine derartige Entsprechung nicht vorliegt, wird die Empfängeruhr 11 entsprechend einem Ausgangssignal des Dekoders 12 synchronisiert.

Wird die Nachregelung der Empfängeruhr 11 in ausreichend kurzen Abständen wiederholt, so ist stets gewährleistet, daß Senderuhr 1 und Empfängeruhr 11 synchron laufen.

Allerdings ist hierzu in der Praxis, wie nachfolgend ausführlich erläutert wird, ein erheblicher technischer Aufwand erforderlich. Dies liegt vor allem an der aufwendigen Gewinnung der Sendezeitmarken aus dem vom Empfänger empfangenen Datenstrom.

Ein herkömmliches Verfahren zur Gewinnung der Sendezeitmarken aus dem vom Empfänger empfangenen Datenstrom besteht im sogenannten Scannen/Parsen der ankommenden Datenelemente in Echtzeit.

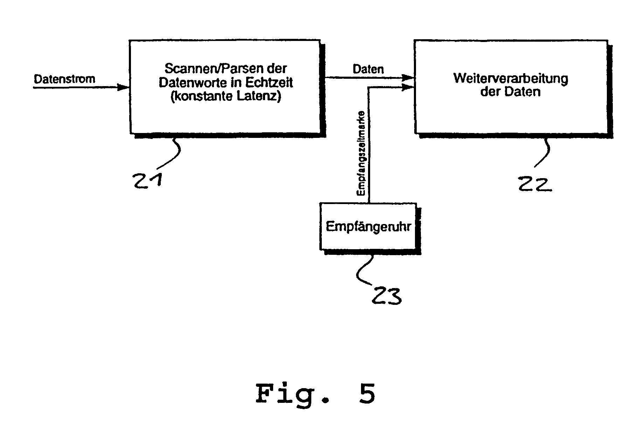

Ein System zur Durchführung dieses Verfahrens ist in Figur 5 gezeigt.

Gemäß Figur 5 gelangt der zum Empfänger übertragene Datenstrom in einen Scanner/Parser 21.

Dieser Scanner/Parser 21 ist aus Hardwareelementen aufgebaut und/oder in einem hinreichend schnellen programmierbaren System implementiert.

Der Scanner/Parser 21 überprüft unter Analysierung der Datenstrom-Struktur aufeinanderfolgend für alle Datenelemente des Datenstroms, ob es sich bei dem jeweils aktuellen Datenelement um eine Sendezeitmarke handelt. Die Datenelemente sowie die aus dem Datenstrom extrahierten Zusatzinformationen werden als Daten zu einer Weiterverarbeitungseinheit 22 ausgegeben.

Wenngleich der Scanner/Parser 21 in der Lage ist, die ankommenden Datenelemente des Datenstroms schritthaltend zu verarbeiten, erfordert die beschriebene Überprüfung gleichwohl eine gewisse Zeit. Darüber hinaus erfordert auch die Übertragung der Daten vom Sender zum Empfänger eine gewisse Zeit.

Die vom Scanner/Parser 21 zur Weiterverarbeitungseinheit 22 ausgegebenen Daten weisen daher eine der Summe der genannten Zeiten entsprechende Latenz auf. Es wird davon ausgegangen, daß die Latenzzeit zeitlich konstant ist.

In die Weiterverarbeitungseinheit 22 werden neben den vom Scanner/Parser 21 ausgegebenen Daten auch die von einer Empfängeruhr 23 ausgegebenen Empfangszeiten in Form von Empfangszeitmarken eingegeben.

Die in den Daten enthaltenen Sendezeitmarken werden in der Weiterverarbeitungseinheit 22 mit den entsprechenden Empfangszeitmarken verglichen. Bei diesem Vergleich ist jedoch die vorstehend bereits erwähnte Latenzzeit entsprechend zu berücksichtigen.

In Abhängigkeit vom Vergleichsergebnis kann die Weiterverarbeitungseinheit 22 ein Signal ausgeben, auf der Basis dessen die Empfängeruhr 23 nachgeregelt wird oder auf der Basis dessen auf der Empfängeruhrzeit basierende Signale entsprechend beeinflußt werden.

Der beschriebene Scanner/Parser 21 ist technisch nur äußerst aufwendig zu realisieren, da er den ankommenden Datenstrom unter Erkennung dessen Struktur in Echtzeit analysieren können muß.

Ein System zur Nachregelung der Empfängeruhr bzw. zur Beeinflussung der davon abgeleiteten Signale, bei welchem keine Auswertung des ankommenden Datenstroms in Echtzeit erforderlich ist, ist ein programmierbarer Scanner/Parser mit Daten- und Empfangszeit-Speichern.

Die Realisierung des Scanners/Parsers als programmierbare Einheit (z.B. unter Verwendung eines Mikrocomputers oder Mikrocontrollers) hat grundsätzlich den Vorteil, daß dieser auf einfache Weise an unterschiedlich strukturierte Datenströme anpaßbar ist, was bei einem rein hardwaremäßig realisierten Scanner/Parser regelmäßig nicht ohne weiteres möglich ist.

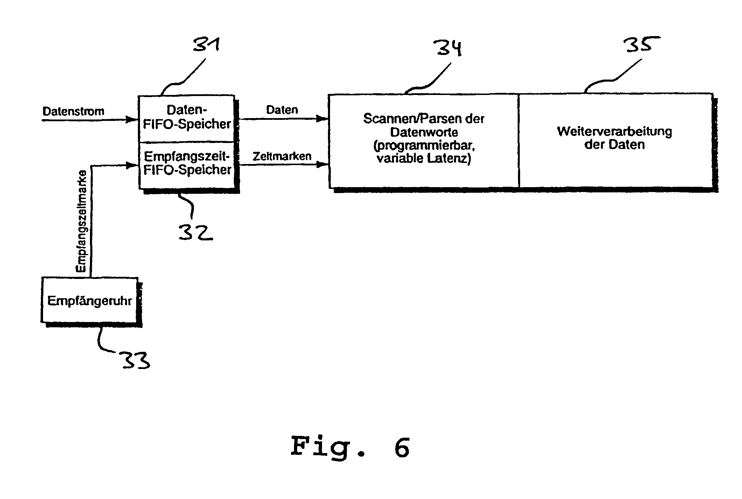

Eine einen programmierbaren Scanner/Parser mit Daten- und Empfangszeit-Speicher enthaltende Anordnung ist in Figur 6 gezeigt.

Gemäß Figur 6 mündet der ankommende Datenstrom in einem Daten-FIFO-Speicher 31, in welchem die Datenelemente (Datenworte) des Datenstroms aufeinanderfolgend gespeichert werden.

Parallel zum Daten-FIFO-Speicher ist ein weiterer FIFO-Speicher in Form eines Empfangszeit-FIFO-Speichers 32 vorgesehen.

In diesem Empfangszeit-FIFO-Speicher 32 werden von einer Empfängeruhr 33 ausgegebene Empfangszeiten in Form von Empfangszeitmarken gespeichert, die jeweils den im Daten-FIFO-Speicher gespeicherten Datenelementen zugeordnet sind.

Da für jedes im Daten-FIFO-Speicher 31 gespeicherte Datenelement im Empfangszeit-FIFO-Speicher 32 eine zugeordnete Empfangszeitmarke gespeichert wird, besitzen die beiden FIFO-Speicher die selbe Tiefe.

Die in den FIFO-Speichern gespeicherten Datenelemente und Zeitmarken können in Abhängigkeit von der Tiefe der FIFO-Speicher und von der Datenübertragungsrate und Pausen in der Datenübertragung eine variable, unbestimmte Zeit später einer Weiterverarbeitung unterworfen werden.

Die in den FIFO-Speichern gespeicherten Datenelemente und Zeitmarken werden dann an einen programmierbaren Scanner/Parser 34 ausgegeben.

Der Scanner/Parser 34 überprüft wiederum unter Analysierung der Struktur des ankommenden Datenstroms jedes (in Frage kommende) Datenelement des Datenstroms daraufhin, ob es sich um eine Sendezeitmarke handelt.

Falls dabei eine Sendezeitmarke gefunden wird, wird diese mit der dieser zugeordneten Empfangszeitmarke verglichen.

In Abhängigkeit vom Ergebnis des Vergleichs zwischen den Sendezeitmarken und den zugehörigen Empfangszeitmarken (unter Berücksichtigung der Latenzzeit) kann ein in der Figur 6 nicht gezeigtes Signal ausgegeben werden, auf der Basis dessen die Empfängeruhr nachgeregelt wird oder auf der Basis dessen die auf der Empfängeruhr basierenden Signale entsprechend beeinflußt werden.

Der Zeitmarkenvergleich und die Auswertung des Vergleichsergebnisses werden in einer sich an den Scanner/Parser 34 anschließenden Weiterverarbeitungseinheit 35 durchgeführt; die Weiterverarbeitungseinheit 35 kann separat oder zusammen mit dem Scanner/Parser 34 als eine Einheit ausgebildet sein.

Das zuletzt, unter Bezugnahme auf die Figur 6 beschriebene Verfahren ist ein Verfahren der im Oberbegriff des Patentanspruchs 1 genannten Art.

Es weist den Nachteil auf, daß die verwendeten FIFO-Speicher eine beträchtliche Kapazität aufweisen müssen, was die Anordnung zur Durchführung des Verfahrens infolge des hohen Hardware-Aufwandes entsprechend teuer, groß und fehleranfällig macht.

Der vorliegenden Erfindung liegt daher die Aufgabe zugrunde, ein Verfahren zur Ermittlung einer Empfängeruhrzeit zum Empfangszeitpunkt einer in empfangenen Datenelementen enthaltenen Sendezeitmarke gemäß dem Oberbegriff des Patentanspruchs 1 derart weiterzubilden, daß die Ermittlung unter minimalem technischen Aufwand durchführbar ist.

Diese Aufgabe wird erfindungsgemäß durch die im kennzeichnenden Teil des Patentanspruchs 1 beanspruchten Merkmale gelöst.

Demnach ist vorgesehen, daß pro bestimmter oder unbestimmter Vielzahl von gespeicherten Datenelementen nur die dem Empfangszeitpunkt eines einzigen Datenelements entsprechende Empfängeruhrzeit gespeichert wird, und daß die Ermittlung der dem Empfangszeitpunkt der Sendezeitmarke entsprechenden Empfängeruhrzeit auf der Basis der gespeicherten Empfängeruhrzeit(en) durch Extra- oder Interpolation erfolgt.

Bedingt durch die Tatsache, daß die Datenelemente des Datenstroms und - soweit erforderlich - die diesen zugeordnete Empfangszeitmarken vor der Datenstromanalyse zwischengespeichert werden, ist es nicht erforderlich, daß die Ermittlung in Echtzeit erfolgt. Die verwendeten Hardware-Komponenten müssen daher nicht für die hierfür erforderliche hohe Arbeitsgeschwindigkeit ausgelegt sein.

Da darüber hinaus die Empfangszeitmarken erfindungsgemäß auch nur für wenige ausgewählte, beliebige Datenelemente gespeichert werden, kann der für die Speicherung der Empfangszeitmarken bereitzustellende Speicher relativ klein bemessen sein, was zu einer erheblichen Reduzierung des Hardwareaufwandes führt.

Der für die Reduzierung des Hardwareaufwandes in Kauf zu nehmende erhöhte Rechenaufwand ist minimal und fällt in der Praxis nicht ins Gewicht.

Es wurde mithin ein Verfahren zur Ermittlung einer Empfängeruhrzeit zum Empfangszeitpunkt einer in empfangenen Datenelementen enthaltenen Sendezeitmarke geschaffen, welches einerseits äußerst flexibel einsetzbar, d. h. an die unterschiedlichsten Übertragungssysteme anpaßbar ist, und welches andererseits die Ermittlung unter minimalem technischen Aufwand ermöglicht.

Vorteilhafte Weiterbildungen der Erfindung sind Gegenstand der Unteransprüche.

Die Erfindung wird nachfolgend anhand von Ausführungsbeispielen unter Bezugnahme auf die Zeichnungen näher erläutert. Es zeigen:

Figur 1 ein Blockschaltbild eines ersten Ausführungsbeispiels einer Anordnung zur Durchführung des erfindungsgemäßen Verfahrens,

Figur 2 ein Blockschaltbild eines zweiten Ausführungsbeispiels einer Anordnung zur Durchführung des erfindungsgemäßen Verfahrens,

Figur 3 einen Zeitablaufplan zur Erläuterung der zeitlichen Abfolge der einzelnen Schritte des erfindungsgemäßen Verfahrens,

Figur 4 eine bekannte Anordnung zum Übertragen und Auswerten von mit Sendezeitmarken versehenen Datenelementen,

Figur 5 eine bekannte Anordnung unter Verwendung einer Vorrichtung zum Scannen/Parsen von ankommenden Datenelementen in Echtzeit, und

Figur 6 eine bekannte Anordnung unter Verwendung einer Vorrichtung zum Scannen/Parsen von ankommenden Datenelementen nicht in Echtzeit.

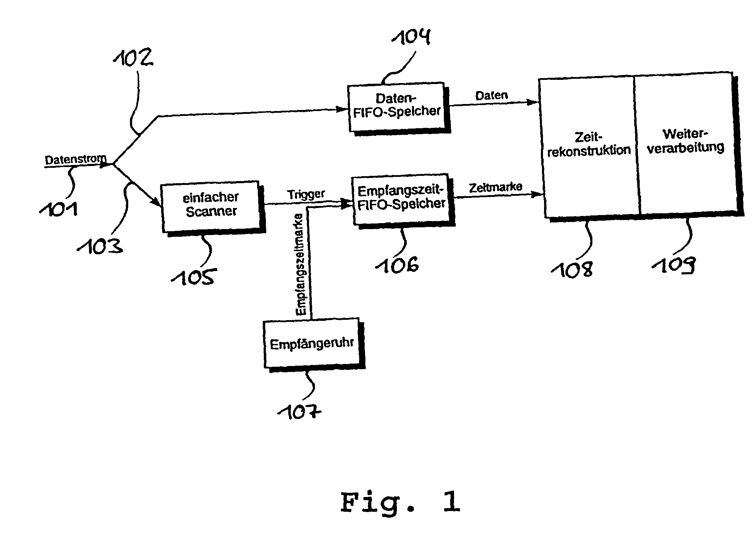

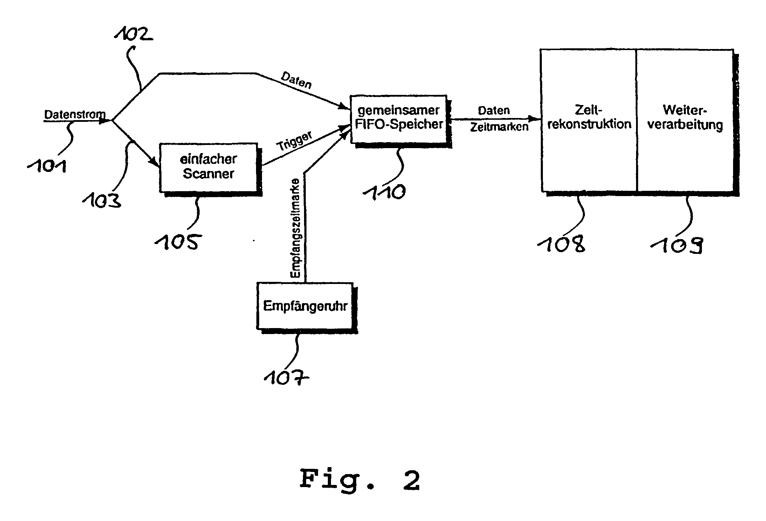

Die Komponenten der in den Figuren 1 und 2 gezeigten Anordnungen zur Ausführung des erfindungsgemäßen Verfahrens sind durch Hardware und/oder programmierbare Einheiten (beispielsweise unter Verwendung eines Mikrocomputers oder Mikrocontrollers) realisiert, die die vollständige Auswertung der einzelnen Datenelemente des ankommenden Datenstroms nicht in Echtzeit, sondern nach einer entsprechenden Zwischenspeicherung erst eine variable, unbestimmte Zeit später durchführen.

Gemäß Figur 1 verzweigt eine den Datenstrom führende Übertragungsstrecke 101 in zwei Übertragungsleitungen 102 und 103.

Die erste Übertragungsleitung 102 leitet den Datenstrom zu einem Daten-FIFO-Speicher 104, in welchem die Datenelemente des Datenstroms aufeinanderfolgend gespeichert werden.

Die zweite Übertragungsleitung 103 leitet den Datenstrom zu einem Scanner 105, welcher vorbestimmte, einfach zu erkennende Datenelemente des ankommenden Datenstroms erkennt und bei jeder Erkennung ein Triggersignal abgibt.

Bei Datenpakete enthaltenden Datenströmen kann der Scanner 105 beispielsweise des Anfang der jeweiligen Datenpakete erkennen (z.B. anhand eines eindeutigen Wertes des ersten Datenelements, anhand eines externen Triggersignals oder anhand eines nicht eindeutigen Wertes in Zusammenhang mit der Paketlänge).

Es besteht jedoch keine Einschränkung darauf, daß der Anfang eines Datenpakets als das "einfach zu erkennende Datenelement" verwendet wird. Es kann sich hierbei vielmehr um jedes beliebige Datenelement handeln, welches jedoch vorzugsweise in geeigneten zeitlichen Abständen wiederholt im Datenstrom auftritt.

Die Erkennung des "einfach zu erkennenden Datenelements" durch den Scanner erfolgt in Echtzeit.

Das bloße Suchen nach bestimmten Datenelementen in einem Datenstrom ist einfach durchführbar und ermöglicht trotz der erforderlichen Ausführung in Echtzeit einen einfachen Aufbau des verwendeten Scanners; der Aufbau des Scanners ist jedenfalls wesentlich einfacher als der Aufbau des in herkömmlichen Anordnungen dieser Art verwendeten Scanners/Parsers.

Das vom Scanner 105 beim Erkennen eines zu erkennenden Datenelements erzeugte Triggersignal wird einem Empfangszeit-FIFO-Speicher 106 zugeführt.

Der Empfangszeit-FIFO-Speicher 106 hat neben dem Triggeranschluß einen zweiten Eingangsanschluß, in welchen von einer Empfängeruhr 107 erzeugte Empfangszeitmarken eingegeben werden.

Eine an den Empfangszeit-FIFO-Speicher 106 angelegte Empfangszeitmarke wird jedoch nur dann im Empfangszeit-FIFO-Speicher gespeichert, wenn durch den Scanner 105 ein Triggersignal erzeugt wird.

Bedingt durch die Tatsache, daß nicht für jedes im Daten-FIFO-Speicher 104 gespeicherte Datenelement, sondern nur für einige wenige ausgewählte Datenelemente die entsprechende Empfangszeitmarke im Empfangszeit-FIFO-Speicher 106 gespeichert wird, kann die Tiefe des Empfangszeit-FIFO-Speichers auf ein Minimum reduziert werden.

Wenn sichergestellt ist, daß eine ausreichend schnelle Weiterverarbeitung der in den FIFO-Speichern gespeicherten Daten erfolgt, kann der Empfangszeit-FIFO-Speicher 106 sogar durch ein einzelnes Register gebildet werden.

Die im Daten-FIFO-Speicher 104 gespeicherten Datenelemente und die im Empfangszeit-FIFO-Speicher 106 gespeicherten Empfangszeitmarken werden jeweils an eine Zeitrekonstruktionseinheit 108 ausgegeben. Dies kann jedoch eine beliebige Zeit nach der Einspeicherung der Datenelemente und Empfangszeitmarken in die jeweiligen FIFO-Speicher geschehen.

Die Zeitrekonstruktionseinheit 108 weist einen in der Figur nicht gezeigten Scannerabschnitt auf, welcher den vorstehend bereits beschriebenen Scanner 105 nachbildet. Der Scannerabschnitt kann mithin die Datenelemente erkennen, für welche Empfangszeitmarken im Empfangszeit-FIFO-Speicher 105 abgespeichert wurden.

Die Zeitrekonstruktionseinheit 108 weist ferner einen in der Figur ebenfalls nicht gezeigten Sendezeitmarkenerkennungsabschnitt auf, welcher in der Lage ist, das Auftreten von Sendezeitmarken unter den Datenelementen und gegebenenfalls auch den Inhalt der Sendezeitmarken zu erfassen.

Wenn nun fortlaufend die im Daten-FIFO-Speicher 104 gespeicherten Datenelemente zur Zeitrekonstruktionseinheit 108 übertragen werden, wird dort jedes einzelne Datenelement durch den Scannerabschnitt und den Sendezeitmarkenerkennungsabschnitt daraufhin überprüft, ob es sich dabei um ein Datenelement handelt, für welches im Empfangszeit-FIFO-Speicher 106 eine zugeordnete Empfangszeit gespeichert ist, oder welches eine Sendezeitmarke oder ein Teil davon ist.

Hat der Scannerabschnitt der Zeitrekonstruktionseinheit 108 ein Datenelement erfaßt, für welches im Empfangszeit-FIFO-Speicher 106 eine zugeordnete Empfangszeit gespeichert ist, so beginnt die Zeitrekonstruktionseinheit 108 die Datenelemente von diesem Datenelement an zu zählen.

Die Empfangszeit, welche für das betreffende Datenelement gespeichert ist, wird im folgenden als Referenzelement-Empfangszeit bezeichnet. Der Zählstand der Zeitrekonstruktionseinheit wird im folgenden als Referenzelementabstand bezeichnet.

Erfaßt der Sendezeitmarkenerfassungsabschnitt ein Datenelement welches eine Sendezeitmarke oder den Beginn einer solchen repräsentiert, so läßt sich der Empfangszeitpunkt der Sendezeitmarke in einer Weiterverarbeitungseinheit 109, welche separat oder zusammen mit der Zeitrekonstruktionseinheit 108 als eine Einheit ausgebildet ist, erfindungsgemäß durch Extra- oder Interpolation auch dann ermitteln, wenn für das betreffende Datenelement keine Empfangszeitmarke gespeichert wurde.

Die Empfangszeit der Sendezeitmarke läßt sich in diesem Fall beispielsweise aus der Referenzelement-Empfangszeit, dem Referenzelementabstand und der Übertragungsrate, mit welcher die gespeicherten Datenelemente vom Sender zum Empfänger übertragen wurden (gemessen in Datenelemente bzw. Datenworte pro Sekunde), ermitteln. Dies läßt sich z.B. nach folgender Formel bewerkstelligen:

$$\text{Empfangszeit der Sendezeitmarke} =$$

$$\text{Referenzelement-Empfangszeit} + \frac{\text{Referenzelementabstand}}{\text{Übertragungsrate}}$$

Es wird dabei davon ausgegangen, daß die Übertragungsrate zumindest abschnittsweise konstant und bekannt ist oder gemessen werden kann. Zur Messung der Übertragungsrate können beispielsweise die im Empfangszeit-FIFO-Speicher abgelegten Werte in Verbindung mit den entsprechenden Referenzelementabständen verwendet werden.

Die obige Möglichkeit zur Berechnung der Empfangszeit der Sendezeitmarke ist nur eine von vielen Möglichkeiten. Unter Verwendung von Extrapolations- und Interpolationsverfahren sind unterschiedlichste weitere Berechnungsverfahren denkbar.

Über eine in Figur 1 nicht gezeigte Verbindung zwischen der Weiterverarbeitungseinheit 109 und der Empfängeruhr 107 kann letztere durch entsprechendes Nachregeln mit der Senderuhr synchronisiert werden. Alternativ oder zusätzlich hierzu kann vorgesehen werden, den zeitlichen Ablauf der Weiterverarbeitung der Datenelemente entsprechend zu beeinflussen.

In Figur 2 ist eine weitere, gegenüber der in Figur 1 gezeigten Anordnung abgewandelte Anordnung gezeigt, mittels der das erfindungsgemäße Verfahren durchführbar ist.

Die in den Figuren 1 und 2 gezeigten Anordnungen sind weitgehend identisch; einander entsprechende Komponenten sind mit den selben Bezugszeichen bezeichnet.

Der einzige Unterschied zwischen den in den Figuren 1 und 2 gezeigten Anordnungen besteht darin, daß in der Anordnung gemäß Figur 2 nur ein einziger FIFO-Speicher 110 vorgesehen ist, der jedoch zur Speicherung sowohl der übertragenen Datenelemente als auch der speziell ausgewählten Empfangszeitpunkte in Form von Empfangszeitmarken dient und mithin den Daten-FIFO-Speicher 104 und den Empfangszeit-FIFO-Speicher 106 gemäß Figur 1 ersetzt.

Die Tiefe dieses gemeinsamen FIFO-Speichers 110 ist so bemessen, daß die ohnehin zu puffernden Datenelemente und die gelegentlich eingestreuten Empfangszeitmarken aufgenommen werden können. D.h., die Tiefe des gemeinsamen FIFO-Speichers 110 entspricht in etwa der Tiefe des Daten-FIFO-Speichers 104 gemäß Figur 1.

Beim Auswerten des Speicherinhalts muß beachtet werden, daß die empfangenen Datenelemente und die Empfangszeitmarken ineinander verschachtelt gespeichert sind, und daß dementsprechend möglicherweise eine veränderte Auslesereihenfolge beachtet werden muß.

Im übrigen ist der Aufbau der in den Figuren 1 und 2 gezeigten Anordnungen jedoch identisch; eine nochmalige Beschreibung der übrigen Komponenten kann daher unterbleiben.

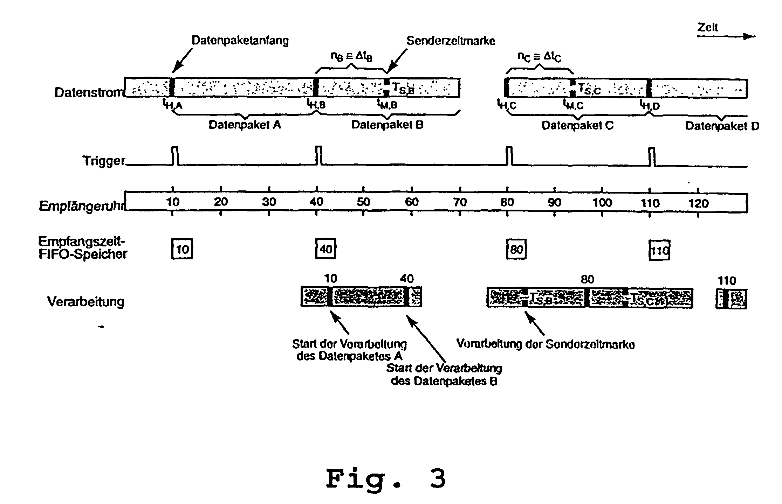

Nachfolgend wird der genaue zeitliche Ablauf der vorstehend beschriebenen Schritte anhand der Figur 3 beschrieben.

Gemäß der Zeile "Datenstrom" der Figur 3 besteht der ankommende Datenstrom aus einzelnen Datenpaketen (Datenpakete A bis D).

Der jeweilige Paketanfang kann vom Scanner 105 eindeutig erkannt werden. Bei Erkennen eines Paketanfangs sendet der Scanner 105 an den Empfangszeit-FIFO-Speicher 106 oder den gemeinsamen FIFO-Speicher 110 ein Triggersignal; dies ist in der Zeile "Trigger" der Figur 3 veranschaulicht.

Das Triggersignal bewirkt, daß der jeweils aktuelle Wert der Empfängeruhr 107 in Form einer Empfangszeitmarke im betreffenden FIFO-Speicher abgelegt wird.

Dies ist in den Zeilen "Empfängeruhr" und "Empfangszeit-FIFO-Speicher" der Figur 3 veranschaulicht. So ist beim Auftreten eines dem Anfang eines Datenpakets A zugeordneten ersten Triggerimpulses der Stand der Empfängeruhr gleich "10", und dementsprechend wird der Wert 10 als Empfangszeitmarke in den entsprechenden FIFO-Speicher geschrieben.

In analoger Weise werden am Anfang der Datenpakete B, C und D die Werte 40, 80 und 110 in den entsprechenden FIFO-Speicher geschrieben.

Die Datenelemente der einzelnen Datenpakete werden im Daten-FIFO-Speicher 104 oder ebenfalls im gemeinsamen FIFO-Speicher 110 gespeichert.

Unbestimmte Zeit nach dem Empfang und dem Speichern der Datenelemente werden diese durch die den FIFO-Speichern nachgeschalteten Einheiten ausgewertet.

Mit der Auswertung des Datenpakets A wird bei dem in der Figur 3 gezeigten Beispiel etwa zum Empfängeruhrzeitstand 43 begonnen (siehe Zeile "Verarbeitung" in Figur 3).

Dabei wird aus dem entsprechenden FIFO-Speicher die zugehörige Paketanfangs-Empfangszeitmarke $t_{H,A}$ = 10 gelesen. Damit ist der Auswerteeinheit bekannt, daß der Anfang des Datenpakets A zum Empfängeruhrzeitstand 10 im Empfänger ankam.

Da das Datenpaket A keine Informationen (Sendezeitmarken) enthält, die zur Empfängeruhr referenziert werden müßten, wird die Empfangszeitmarke $t_{H,A}$ = 10 für das Datenpaket A verworfen.

Mit der Auswertung des Datenpakets B wird gemäß dem in Figur 3 veranschaulichten Beispiel etwa zum Empfängeruhrzeitstand 59 begonnen.

Mit dem Lesen der entsprechenden Paketanfangs-Empfangszeitmarke $t_{H,B}$ = 40 aus dem entsprechenden FIFO-Speicher ist der Auswerteeinheit bekannt, daß der Anfang des Datenpakets B zum Empfängeruhrzeitstand 40 im Empfänger ankam.

Im weiteren Verlauf der Auswertung des Datenpakets B wird im Beispiel etwa zum Empfängeruhrzeitstand 84 eine Sendezeitmarke mit dem Wert $T_{S,B}$ erkannt, die in Relation zum zugehörigen Empfangszeitpunkt $t_{M,B}$ gesetzt werden soll.

Da für diese Sendezeitmarke keine entsprechende Empfangszeitmarke gespeichert ist, muß der Wert für $t_{M,B}$ berechnet werden, was folgendermaßen geschieht:

Zwischen dem Anfang des Datenpakets B und der Sendezeitmarke $T_{S,B}$ wurden $n_B$ Datenelemente (Datenworte) gezählt. Aufgrund der bekannten Datenübertragungsrate R (in Datenelemente bzw. Datenworte pro Sekunde) kann die Zeit zwischen dem Paketanfangs-Empfangszeitpunkt des Datenpakets B ($t_{H,B}$ = 40) und dem Empfang der Sendezeitmarke $T_{S,B}$ ($t_{M,B}$) berechnet werden mit $\Delta t_B = n_B/R$.

Damit ist der Empfangszeitpunkt $t_{M,B} = t_{H,B} + \Delta t_B$ der Sendezeitmarke $T_{S,B}$ bekannt.

Die weiteren Daten und Zeitmarken im Datenstrom können entsprechend ausgewertet werden.

Dies ist anhand der Figur 3 leicht nachvollziehbar. Der Vollständigkeit halber wird nachfolgend eine Auflistung der in der Figur 3 verwendeten Bezeichnungen und deren Bedeutung wiedergegeben.

$t_{H,A}$ : Empfangszeitpunkt des Anfangs des Datenpakets A

$t_{H,B}$ : Empfangszeitpunkt des Anfangs des Datenpakets B

$t_{H,C}$ : Empfangszeitpunkt des Anfangs des Datenpakets C

$t_{H,D}$ : Empfangszeitpunkt des Anfangs des Datenpakets D

$t_{M,B}$ : Empfangszeitpunkt der Sendezeitmarke B

$t_{M,C}$ : Empfangszeitpunkt der Sendezeitmarke C

$T_{S,B}$ : Sendezeitmarke B

$T_{S,C}$ : Sendezeitmarke C

$n_B$ : Anzahl der empfangenen Datenelemente von der letzten Empfangszeitmarke bis zur Sendezeitmarke B

$n_C$ : Anzahl der empfangenen Datenelemente von der letzten Empfangszeitmarke bis zur Sendezeitmarke C

$\Delta t_B$ : Zeit zwischen $t_{H,B}$ und $t_{M,B}$

$\Delta t_C$ : Zeit zwischen $t_{H,C}$ und $t_{M,C}$

Abschließend werden die Besonderheiten bei zwei konkreten Anwendungsbeispielen (Transport Stream und Program Stream gemäß MPEG2-Standard (ISO/IEC 13818)) erläutert.

Der Transport Stream ist ein paketorientierter Datenstrom. Jedes Pakt enthält 188 Bytes. Ein Paketanfang kann mit geringem Aufwand im Scanner erkannt werden, da die vorausgehende Schaltung den Paketanfang über eine Steuerleitung signalisieren kann. Alternativ kann der Scanner jedes Byte prüfen, ob es den Wert $47_{16}$ hat, daran einen Paketanfang erkennen und alle 188 Bytes ein Triggersignal an den Empfangszeit-FIFO-Speicher zur Speicherung der aktuellen Empfangszeitmarke senden.

Der Program Stream ist stromorientiert. Die im Strom kodierten Datenpakete haben eine variable Länge. Ein Paketanfang kann mit geringem Aufwand im Scanner erkannt werden, da ein Paketanfang durch vier Bytes mit den Werten $0_{16}$, $0_{16}$, $1_{16}$, $BA_{16}$ gekennzeichnet ist. Diese Datensequenz ist eindeutig und wird in den Nutzdaten nicht emuliert.

Sowohl beim Transport Stream als auch beim Program Stream liegen die Sendezeitmarken zur Synchronisation der Empfängeruhr - sofern vorhanden - eine feste Anzahl von Elementen bzw. Worten vom Datenpaketanfang entfernt.

Da in einem realen System die Datenrate innerhalb eines Pakets konstant ist und die ebenfalls konstante Latenz zwischen Sender (MPEG2-Enkoder) und Empfänger (MPEG2-Dekoder) unerheblich ist, kann ein für den Datenpaketanfang gespeicherter Referenzzeitpunkt unmittelbar als Referenz für die übertragene Sendezeitmarke verwendet werden.

Nutzt man diese Besonderheiten zusätzlich aus, gelangt man zu einem noch weiter vereinfachten und noch zuverlässiger arbeitenden Verfahren zur Ermittlung der Empfängeruhrzeit zum Empfangszeitpunkt einer in empfangenen Datenelementen enthaltenen Sendezeitmarke.

Bezugszeichenliste

D     Datenübertragungsstrecke

E     Empfänger

S     Sender

1     Senderuhr

| 2 | Encoder |
|---|---|
| 11 | Empfängeruhr |
| 12 | Dekoder |
| 21 | Scanner/Parser |
| 22 | Weiterverarbeitungseinheit |
| 23 | Empfängeruhr |
| 31 | Daten-FIFO-Speicher |
| 32 | Empfangszeit-FIFO-Speicher |
| 33 | Empfängeruhr |
| 34 | programmierbarer Scanner/Parser |
| 35 | Weiterverarbeitungseinheit |
| 101 | Übertragungsstrecke |
| 102 | erste Übertragungsleitung |
| 103 | zweite Übertragungsleitung |
| 104 | Daten-FIFO-Speicher |
| 105 | Scanner |
| 106 | Empfangszeit-FIFO-Speicher |
| 107 | Empfängeruhr |
| 108 | Zeitrekonstruktionseinheit |
| 109 | Weiterverarbeitungseinheit |
| 110 | gemeinsamer FIFO-Speicher |

**Patentansprüche**

1. Verfahren zur Ermittlung einer Empfängeruhrzeit zum Empfangszeitpunkt einer in empfangenen Datenelementen enthaltenen Sendezeitmarke, mit den Schritten

Speichern einer Vielzahl von aufeinanderfolgend empfangenen Datenelementen,

Speichern einer einem Datenelementempfangszeitpunkt ($t_{H,A}$; $t_{H,B}$) entsprechenden Empfängeruhrzeit,

Durchsuchen der gespeicherten Datenelemente nach einer Sendezeitmarke ($T_{S,B}$), und

Ermittlung der dem Empfangszeitpunkt ($t_{M,B}$) der Sendezeitmarke entsprechenden Empfängeruhrzeit anhand der einen oder mehreren gespeicherten Empfängeruhrzeiten,

**dadurch gekennzeichnet,**

**daß** für eine Vielzahl von gespeicherten Datenelementen nur die dem Empfangszeitpunkt ($t_{H,A}$; $t_{H,B}$) eines einzigen Datenelements entsprechende Empfängeruhrzeit gespeichert wird, und

**daß** die Ermittlung der dem Empfangszeitpunkt ($t_{M,B}$) der Sendezeitmarke ($T_{S,B}$) entsprechenden Empfängeruhrzeit auf der Basis der einen oder mehreren gespeicherten Empfängeruhrzeiten durch Extra- oder Interpolation erfolgt.

2. Verfahren nach Anspruch 1,
**dadurch gekennzeichnet,**
**daß** die empfangenen Datenelemente in einem Datenstrom mit einer zumindest abschnittsweise gleichbleibenden Datenübertragungsrate (R) übertragen werden.

3. Verfahren nach Anspruch 1 oder 2,
**dadurch gekennzeichnet,**
**daß** die Vielzahl von aufeinanderfolgend gespeicherten Datenelementen die Datenelemente eines Datenpakets (A, B, C, D) eines paket- oder stromorientierten Datenstroms sind.

4. Verfahren nach Anspruch 3,
**dadurch gekennzeichnet,**
**daß** als Empfängeruhrzeit diejenige Empfängeruhrzeit gespeichert wird, welche dem Empfangszeitpunkt ($t_{H,A}$; $t_{H,B}$) des Anfangs eines jeweiligen Datenpakets (A, B, C, D) entspricht.

5. Verfahren nach einem der vorhergehenden Ansprüche,
**dadurch gekennzeichnet,**
**daß** die Ermittlung der dem Empfangszeitpunkt der Sendezeitmarke ($t_{M,B}$) entsprechende Empfängeruhrzeit unter Berücksichtigung eines Abstandes ($n_B$) der Sendezeitmarke von einem Datenelement (B) durchgeführt wird, für welches eine Empfängeruhrzeit ($t_{H,B}$) gespeichert ist.

**6.** Verfahren nach Anspruch 5,
**dadurch gekennzeichnet,**
**daß** der besagte Abstand ($n_B$) ermittelt wird, indem gezählt wird, beim wievielten Datenelement nach dem Datenelement (B), für welches eine Empfängeruhrzeit ($t_{H,B}$) gespeichert ist, die Sendezeitmarke ($t_{S,B}$) beginnt.

**7.** Verfahren nach einem der vorhergehenden Ansprüche,
**dadurch gekennzeichnet,**
**daß** die Ermittlung der dem Empfangszeitpunkt ($t_{M,B}$) der Sendezeitmarke ($T_{S,B}$) entsprechende Empfängeruhrzeit unter Berücksichtigung der Datenübertragungsrate (R) erfolgt.

**8.** Verfahren nach einem der vorhergehenden Ansprüche,
**dadurch gekennzeichnet,**
**daß** sich der Empfangszeitpunkt ($t_{M,B}$) $t_{M,B}$ der Sendezeitmarke ($T_{S,B}$) $T_{S,B}$ eines Datenpakets (B) B nach der Formel

$$t_{M,B} = t_{H,B} + n_B/R$$

errechnet, wobei $t_{H,B}$ der Empfangszeitpunkt des Anfangs des Datenpakets (B) B ist, $n_B$ die Anzahl der empfangenen Datenelemente (B) vom Zeitpunkt ($t_{H,B}$) $t_{H,B}$ bis zur Sendezeitmarke ($T_{S,B}$) $T_{S,B}$ ist, und R die Datenübertragungsrate (R) [Datenelemente pro Sekunde] ist.

**9.** Verfahren nach einem der vorhergehenden Ansprüche,
**dadurch gekennzeichnet,**
**daß** die zu speichernden Datenelemente (A, B, C, D) in einem Daten-FIFO-Speicher (104) gespeichert werden.

**10.** Verfahren nach einem der vorhergehenden Ansprüche,
**dadurch gekennzeichnet,**
**daß** die zu speichernden Empfängeruhrzeiten ($t_{H,A}$; $t_{H,B}$) in einem Empfangszeit-FIFO-Speicher (106) gespeichert werden.

**11.** Verfahren nach Anspruch 10,
**dadurch gekennzeichnet,**
**daß** als Empfangszeit-FIFO-Speicher (106) ein einzelnes Register verwendet wird.

**12.** Verfahren nach einem der Ansprüche 9 bis 11,
**dadurch gekennzeichnet,**
**daß** der Daten-FIFO-Speicher (104) und der Empfangszeit-FIFO-Speicher (106) als ein gemeinsamer FIFO-Speicher (110) ausgebildet sind.

**13.** Verfahren nach einem der vorhergehenden Ansprüche,
**dadurch gekennzeichnet,**
**daß** die zu speichernden Empfängeruhrzeiten ($t_{H,A}$; $t_{H,B}$) jeweils beim Auftreten eines Triggersignals gespeichert werden.

**14.** Verfahren nach Anspruch 13,
**dadurch gekennzeichnet,**
**daß** das Triggersignal durch einen Scanner (105) erzeugt wird, der das Auftreten eines vorbestimmten Datenelements oder einer vorbestimmten Datenelement-Folge überwacht, für das bzw. für die eine Empfängeruhrzeit gespeichert werden soll.

**15.** Verfahren nach Anspruch 14,
**dadurch gekennzeichnet,**
**daß** das Triggersignal durch den Scanner (105) alternativ oder zusätzlich auch dann erzeugt wird, nachdem eine bestimmte Anzahl ($n_a$,$n_b$) Datenelementen (A, B, C, D) seit der Speicherung der letzten Empfängeruhrzeit ($t_{H,A}$; $t_{H,B}$) empfangen wurde.

**16.** Verfahren nach einem der Ansprüche 14 und 15,
**dadurch gekennzeichnet,**
**daß** die Überwachung des Auftretens eines vorbestimmten Datenelements (A, B, C, D) oder einer vorbestimmten Datenelement-Folge durch den Scanner (105) in Echtzeit durchgeführt wird.

**17.** Verfahren nach einem der vorhergehenden Ansprüche,
**dadurch gekennzeichnet,**
**daß** die gespeicherten Datenelemente (A, B, C, D) und die gespeicherten Empfängeruhrzeiten ($t_{H,A}$; $t_{H,B}$) eine variable, unbestimmte Zeit nach dem Empfang zur Analyse und/oder Weiterverarbeitung ausgegeben werden.

**18.** Verfahren nach Anspruch 17,
**dadurch gekennzeichnet,**
**daß** in einer Analyseeinheit (108, 109) zur Analyse der Daten der Scanner (105) nachgebildet ist, um für jedes Datenelement (A, B, C, D) ermitteln zu können, ob für dieses Datenelement (A, B, C, D) eine Empfängeruhrzeit ($t_{H,A}$; $t_{H,B}$) gespeichert ist.

**19.** Verfahren nach einem der vorhergehenden Ansprüche,
**dadurch gekennzeichnet,**
**daß** die zu speichernden Empfängeruhrzeiten ($t_{H,A}$; $t_{H,B}$) in Form von Empfangszeitmarken gespeichert und weiterverarbeitet werden.

**Claims**

**1.** Method for determining a receiver clock time at the reception instant of a transmission time marker contained in received data elements, having the steps of

storing a multiplicity of successively received data elements,

storing a receiver clock time which corresponds to a data element reception instant ($t_{H,A}$; $t_{H,B}$),

searching through the stored data elements for a transmission time marker ($T_{S,B}$), and

determining the receiver clock time, which corresponds to the reception instant ($t_{M,B}$) of the transmission time marker, using the one or more stored receiver clock times,

**characterized**

**in that** only the receiver clock time which corresponds to the reception instant ($t_{H,A}$; $t_{H,B}$) of a single data element is stored for a multiplicity of stored data elements, and

**in that** the determination of the receiver clock time corresponding to the reception instant ($t_{M,B}$) of the transmission time marker ($T_{S,B}$) takes place on the basis of the one or more stored receiver clock times by means of extrapolation or interpolation.

**2.** Method according to Claim 1, **characterized in that** the received data elements are transmitted in a data stream at a data transmission rate (R) which is constant at least in sections.

**3.** Method according to Claim 1 or 2, **characterized in that** the multiplicity of successively stored data elements are the data elements of a data packet (A, B, C, D) of a packet- or stream-oriented data stream.

**4.** Method according to Claim 3, **characterized in that** the receiver clock time stored is that receiver clock time which corresponds to the reception instant ($t_{H,A}$; $t_{H,B}$) of the start of a respective data packet (A, B, C, D).

**5.** Method according to one of the preceding claims, **characterized in that** the determination of the receiver clock time corresponding to the reception instant of the transmission time marker ($t_{M,B}$) is carried out taking into account a spacing ($h_B$) of the transmission time marker from a data element (B) for which a receiver clock time ($t_{H,B}$) is stored.

**6.** Method according to Claim 5, **characterized in that** the said spacing ($h_B$) is determined by counting to see at which data element the transmission time marker ($T_{S,B}$) begins, starting the count after the data element (B) for which a receiver clock time ($t_{H,B}$) is stored.

**7.** Method according to one of the preceding claims, **characterized in that** the determination of the receiver clock time corresponding to the reception instant ($t_{M,B}$) of the transmission time marker ($T_{S,B}$) takes place taking account of the data transmission rate (R).

8. Method according to one of the preceding claims, **characterized in that** the reception instant ($t_{M,B}$) of the transmission time marker ($T_{S,B}$) of a data packet (B) is calculated in accordance with the formula

$$t_{M,B} = t_{H,B} + n_B/R$$

where $t_{H,B}$ is the reception instant of the start of the data packet (B), $n_B$ is the number of received data elements (B) from the instant ($t_{H,B}$) to the transmission time marker ($T_{S,B}$), and R is the data transmission rate [data elements per second].

9. Method according to one of the preceding claims, **characterized in that** the data elements (A, B, C, D) to be stored are stored in a data FIFO memory (104).

10. Method according to one of the preceding claims, **characterized in that** the receiver clock times ($t_{H,A}$; $t_{H,B}$) to be stored are stored in a reception time FIFO memory (106).

11. Method according to Claim 10, **characterized in that** a single register is used as the reception time FIFO memory (106).

12. Method according to one of Claims 9 to 11, **characterized in that** the data FIFO memory (104) and the reception time FIFO memory (106) are designed as a common FIFO memory (110).

13. Method according to one of the preceding claims, **characterized in that** the receiver clock times ($t_{H,A}$; $t_{H,B}$) to be stored are in each case stored when a trigger signal occurs.

14. Method according to Claim 13, **characterized in that** the trigger signal is generated by a scanner (105), which monitors the appearance of a predetermined data element or of a predetermined data element sequence for which a receiver clock time is to be stored.

15. Method according to Claim 14, **characterized in that** the trigger signal is alternatively or additionally generated by the scanner (105) even after a specific number ($n_b$; $n_c$) of data elements (A, B, C, D) have been received since the storage of the last receiver clock time ($t_{H,A}$; $t_{H,B}$).

16. Method according to either of Claims 14 and 15, **characterized in that** the monitoring of the appearance of a predetermined data element (A, B, C, D) or of a predetermined data element sequence by the scanner (105) is carried out in real time.

17. Method according to one of the preceding claims, **characterized in that** the stored data elements (A, B, C, D) and the stored receiver clock times ($t_{H,A}$; $t_{H,B}$) are output for analysis and/or further processing following a variable, indefinite time after reception.

18. Method according to Claim 17, **characterized in that** the scanner (105) is simulated in an analysis unit (108, 109) for analysis of the data, in order to be able to determine, for each data element (A, B, C, D), whether a receiver clock time ($t_{H,A}$; $t_{H,B}$) is stored for this data element.

19. Method according to one of the preceding claims, **characterized in that** the receiver clock times ($t_{H,A}$; $t_{H,B}$) to be stored are stored and further processed in the form of reception time markers.

**Revendications**

1. Procédé pour déterminer un temps d'horloge d'un récepteur à l'instant de réception d'un marqueur temporel d'émission contenu dans des éléments de données reçus, comprenant les étapes consistant à:

mémoriser une pluralité d'éléments de données reçus successivement,
mémoriser un temps d'horloge de récepteur correspondant à un instant de réception d'élément de données ($t_{H,A}$ ; $t_{H,B}$)
analyser les éléments de données mémorisés à la recherche d'un marqueur temporel d'émission ($T_{S,B}$), et

déterminer le temps d'horloge de récepteur correspondant à l'instant de réception ($t_{M,B}$) du marqueur temporel d'émission à l'aide du ou de plusieurs temps d'horloge de récepteur mémorisés,

**caractérisé en ce que**

pour une pluralité d'éléments de données mémorisés, seul le temps d'horloge de récepteur correspondant à l'instant de réception ($t_{H,A}$ ; $t_{H,B}$) d'un seul élément de données est mémorisé, et que

la détermination du temps d'horloge de récepteur correspondant à l'instant de réception ($t_{M,B}$) du marqueur temporel d'émission ($T_{S,B}$) a lieu, par extrapolation ou interpolation, sur la base du ou de plusieurs temps d'horloge de récepteur mémorisés.

2. Procédé selon la revendication 1,
   **caractérisé en ce que**
   les éléments de données reçus sont transmis dans un flux de données avec une vitesse de transmission des données (R) constante au moins en partie.

3. Procédé selon la revendication 1 ou 2,
   **caractérisé en ce que**
   la pluralité d'éléments de données mémorisés successivement sont les éléments de données d'un paquet de données (A, B, C, D) d'un flux de données orienté paquet ou flux.

4. Procédé selon la revendication 3,
   **caractérisé en ce que**
   comme temps d'horloge de récepteur, on mémorise le temps d'horloge de récepteur qui correspond à l'instant de réception ($t_{H,A}$ ; $t_{H,B}$) du début de chaque paquet de données (A, B, C, D).

5. Procédé selon l'une quelconque des revendications précédentes,
   **caractérisé en ce que**
   la détermination du temps d'horloge de récepteur correspondant à l'instant de réception du marqueur temporel d'émission ($t_{M,B}$) est réalisée en tenant compte d'un intervalle ($n_B$) entre le marqueur temporel d'émission et un élément de données (B) pour lequel un temps d'horloge de récepteur ($t_{M,B}$) est mémorisé.

6. Procédé selon la revendication 5,
   **caractérisé en ce que**
   l'intervalle ($n_B$) est déterminé en comptant au bout de combien d'éléments de données après l'élément de données (B), pour lequel un temps d'horloge de récepteur ($t_{M,B}$) est mémorisé, le marqueur temporel d'émission ($T_{S,B}$) commence.

7. Procédé selon l'une quelconque des revendications précédentes,
   **caractérisé en ce que**
   la détermination du temps d'horloge de récepteur correspondant à l'instant de réception ($t_{M,B}$) du marqueur temporel d'émission ($T_{S,B}$) a lieu en tenant compte de la vitesse de transmission des données (R).

8. Procédé selon l'une quelconque des revendications précédentes,
   **caractérisé en ce que**
   l'instant de réception ($t_{M,B}$) $t_{M,B}$ du marqueur temporel d'émission ($T_{S,B}$) $T_{S,B}$ d'un paquet de données (B) B se calcule selon la formule :

$$t_{M,B} = t_{H,B} + n_B/R$$

où $t_{H,B}$ est l'instant de réception du début du paquet de données (B) B, $n_B$ est le nombre d'éléments de données (B) reçus de l'instant ($t_{H,B}$) $t_{H,B}$ jusqu'au marqueur temporel d'émission ($T_{S,B}$) $T_{S,B}$, et R est la vitesse de transmission des données (R) (éléments de données par seconde).

9. Procédé selon l'une quelconque des revendications précédentes,
   **caractérisé en ce que**
   les éléments de données (A, B, C, D) à mémoriser sont mémorisés dans une mémoire FIFO de données (104).

**10.** Procédé selon l'une quelconque des revendications précédentes,
**caractérisé en ce que**
les temps d'horloge de récepteur ($t_{H,A}$ ; $t_{H,B}$) à mémoriser sont mémorisés dans une mémoire FIFO de temps de réception (106).

**11.** Procédé selon la revendication 10,
**caractérisé en ce qu'**
un registre unique est utilisé comme mémoire FIFO de temps de réception (106).

**12.** Procédé selon une des revendications 9 à 11,
**caractérisé en ce que**
la mémoire FIFO de données (104) et la mémoire FIFO de temps de réception (106) sont conçues comme une mémoire FIFO commune (110).

**13.** Procédé selon l'une quelconque des revendications précédentes,
**caractérisé en ce que**
les temps d'horloge de récepteur ($t_{H,A}$ ; $t_{H,B}$) à mémoriser sont mémorisés à chaque apparition d'un signal de déclenchement.

**14.** Procédé selon la revendication 13,
**caractérisé en ce que**
le signal de déclenchement est généré par un scanneur (105), qui contrôle l'apparition d'un élément de données prédéterminé ou d'une séquence d'éléments de données prédéterminée, pour lequel ou pour laquelle un temps d'horloge de récepteur doit être mémorisé.

**15.** Procédé selon la revendication 14,
**caractérisé en ce que**
de façon alternative ou supplémentaire, le signal de déclenchement est aussi généré par le scanneur (105) après qu'on ait reçu un nombre ($n_B$, $n_C$) déterminé d'éléments de données (A, B, C, D) depuis la mémorisation du dernier temps d'horloge de récepteur ($t_{H,A}$ ; $t_{H,B}$).

**16.** Procédé selon une des revendications 14 et 15,
**caractérisé en ce que**
le contrôle de l'apparition d'un élément de données (A, B, C, D) prédéterminé ou d'une séquence d'éléments de données prédéterminée est réalisé par le scanneur (105) en temps réel.

**17.** Procédé selon l'une quelconque des revendications précédentes,
**caractérisé en ce que**
les éléments de données (A, B, C, D) mémorisés et les temps d'horloge de récepteur ($t_{H,A}$ ; $t_{H,B}$) mémorisés sont extraits, un temps indéterminé et variable après la réception, pour l'analyse et/ou le traitement ultérieur.

**18.** Procédé selon la revendication 17,
**caractérisé en ce que**
dans une unité d'analyse (108, 109) pour l'analyse des données, le scanneur (105) est simulé pour pouvoir déterminer pour chaque élément de données (A, B, C, D) si un temps d'horloge de récepteur ($t_{H,A}$ ; $t_{H,B}$) est mémorisé pour cet élément de données (A, B, C D).

**19.** Procédé selon l'une quelconque des revendications précédentes,
**caractérisé en ce que**
les temps d'horloge de récepteur ($t_{H,A}$ ; $t_{H,B}$) à mémoriser sont mémorisés et traités ultérieurement sous forme de marqueurs temporels de réception.

Fig. 1

EP 0 840 962 B1

102

Datenstrom

101

103

einfacher Scanner

105

Daten

Trigger

gemeinsamer FIFO-Speicher

110

Daten Zeitmarken

Empfangszeitmarke

Empfängeruhr

107

Zeit-rekonstruktion

108

Weiter-verarbeitung

109

Fig. 2

Fig. 3

Fig. 4

Datenstrom → Scannen/Parsen der Datenworte in Echtzeit (konstante Latenz) — 21

Daten → Weiterverarbeitung der Daten — 22

Empfangszeitmarke

Empfängeruhr — 23

Fig. 5

Fig. 6